# EUROPEAN PATENT SPECIFICATION

(11) **EP 3 638 045 B1**
(45) Date of publication and mention of the grant of the patent: **20.05.2026**
(21) Application number: 18737942.5
(22) Date of filing: 15.06.2018
(51) Int. Cl.: A23C 15/04, A23C 15/06, A23C 15/12

(54) **METHOD FOR PRODUCTION OF BUTTER**
VERFAHREN ZUR HERSTELLUNG VON BUTTER
PROCÉDÉ POUR LA PRODUCTION DE BEURRE

(30) Priority: 16.06.2017 FI 20175565
(43) Date of publication of application: 22.04.2020
(73) Proprietor: Valio Ltd, 00370 Helsinki (FI)
(72) Inventor: MUURONEN, Klaus, 00370 Helsinki (FI); HEINO, Antti, 00370 Helsinki (FI); VALKONEN, Niina, 00370 Helsinki (FI)
(74) Representative: Kolster Oy Ab
(86) International application number: PCT/FI2018/050469
(87) International publication number: WO 2018/229347

(56) References cited:
- EP-A2- 2 409 574
- GB-A- 354 187
- US-A- 1 509 084
- US-A- 2 168 376
- US-A- 3 899 605
- US-A- 4 454 160
- FINDIK OSMAN ET AL: "Some chemical and microbiological properties of the butter and the butter oil produced from the same raw material", LWT- FOOD SCIENCE AND TECHNOLOGY, ACADEMIC PRESS, UNITED KINGDOM, vol. 86, 2 August 2017 (2017-08-02), pages 233 - 239, XP085185586, ISSN: 0023-6438, DOI: 10.1016/J.LWT.2017.08.002
- ANONYMOUS: "Lactose-Free Butter", GNPD, MINTEL, 1 July 2015 (2015-07-01), XP002767514
- MICHEL BRITTEN ET AL: "Effect of cream treatment on phospholipids and protein recovery in butter-making process", INTERNATIONAL JOURNAL OF FOOD SCIENCE AND TECHNOLOGY., vol. 43, no. 4, 1 April 2008 (2008-04-01), GB, pages 651 - 657, XP055356557, ISSN: 0950-5423, DOI: 10.1111/j.1365-2621.2007.01501.x
- B. H. NISSEN: "The pH of Butter and Its Relation to Titratable Acidity", ANALYTICAL EDITION, 18 April 1931 (1931-04-18), pages 374 - 376, XP055507261, Retrieved from the Internet <URL:https://pubs.acs.org/doi/pdf/10.1021/ac50076a018> [retrieved on 20180914]

## Description

### FIELD OF THE INVENTION

The present invention relates to butter with a modified nonfat dry matter, and a method for making the same. The butter shows superior properties during frying.

### BACKGROUND OF THE INVENTION

It is well known that conventional butter sold at retail will burn and form burnt black particles (burnt black precipitates, black flakes), hereinafter described as crust, when heated to frying temperatures. The crust is mainly composed of protein, lactose and milk minerals present in butter. Typically, the crust has undesirable burnt flavour. Frying, heating or grilling of food in butter generally provides an appealing browned surface to the food. Burning of butter, however, may undesirably generate combustion products and even carcinogenic compounds detrimental to health.

There is also clarified butter (also known as "ghee") available at retail, which does not contain protein, carbohydrates or milk minerals but is composed of 100% butter oil. Clarified butter is well suitable for frying and does not burn or blacken. It may thus be seen that frying of food with clarified butter without burning is healthier than frying with conventional butter. However, the desired browning of fat and desired browned flavour intensity and characteristics of milk protein are not achieved with clarified butter.

US 4038436 discloses a margarine-like product which does not burn during normal frying operations and in which the degree of browning during frying is controlled. EP 2409574 A2 discloses a process to produce frying butter involving adding gas to butter having a viscosity of 20-200 Pa.s until the butter comprises 2-30 vol% gas.

We have now found butter which has desirable combined characteristics of conventional butter and clarified butter in which the degree of browning during frying is controlled to the desired level. The butter produced in the invention does not blacken or burn during frying but provides an appealing brown color to a food product during frying.

### BRIEF DESCRIPTION OF THE INVENTION

An object of the present invention is to provide a method of making a butter product, comprising the steps of:
- providing a butter raw material having a fat content at least 35% by weight,
- adjusting the nonfat dry matter of the butter raw material to a range of 0.15% to 1.0% by weight, more specifically 0.15% to 0.5% by weight, even more specifically 0.15% to 0.2% by weight,
- optionally churning the butter raw material to provide butter,
- adjusting the pH to provide the butter product having a pH in the range of 4.5 to 8.5.

In the present invention, the term "butter" means a conventional food product described as butter which has a milk fat content of at least 80% by weight. In addition to fat, butter contains an aqueous phase mainly composed of protein, lactose and milk minerals constituting a nonfat dry matter of butter. The term "butter" as used herein complies with the provisions in Codex standard 279-1971 for butter.

The term "ghee" as used herein complies with the provisions in Codex standard 280-1973 for ghee. The term "clarified butter" as used herein complies with the provisions in Codex standard 280-1973 for butteroil.

While butter is an emulsion of water in oil, ghee and clarified butter (butteroil) are substantially free from water.

It was found in the present invention that modification of the nonfat dry matter of butter and adjustment of the pH of butter provides a butter product which shows beneficial frying, heating and grilling properties. The butter product does not burn but will desirably brown when heated to frying temperatures.

Another object of the invention is to provide butter having a fat content of at least 80% by weight, a nonfat dry matter in the range of 0.15% to 1.0% by weight and a pH in the range of 4.5 to 8.5.

### DETAILED DESCRIPTION OF THE INVENTION

An object of the present invention is to provide a method of making a butter product, comprising the steps of:
- providing a butter raw material having a fat content at least 35% by weight,
- adjusting the nonfat dry matter of the butter raw material to a range of 0.15% to 1.0% by weight, more specifically 0.15% to 0.5% by weight, even more specifically 0.15% to 0.2% by weight,
- optionally churning the butter raw material to provide butter,
- adjusting the pH to provide the butter product having a pH in the range of 4.5 to 8.5.

In an embodiment of the invention, the butter raw material is raw cream having a fat content of about 35% to about 60% by weight. In an embodiment, the cream has a fat content of about 40% by weight. The raw cream can be obtained in a conventional manner by subjecting fresh full fat milk to a centrifugal separator which provides a cream portion and a skimmed milk portion. The cream portion is then churned to provide a butter with a fat content of at least 80% by weight.

Raw cream with a fat content of about 35% to about 60% by weight can also be obtained by subjecting fresh full fat milk to microfiltration to provide a cream portion as a microfiltration retentate and skimmed milk portion as a microfiltration permeate. Microfiltration is appropriately carried out using a membrane with a pore size of about 1.4 µm whereby milk fat is concentrated in the retentate.

In another embodiment, the butter raw material is clarified butter having a fat content of about 100% by weight. Clarified butter is typically produced by melting conventional butter whereby milk solids and water are separated by density from the butterfat. The water evaporates, a portion of solids migrates to the surface of the butter and are skimmed off, and rest of the milk solids sinks to the bottom. The upper part is substantially composed of butter fat and is poured off. Commercial methods of production also include direct evaporation but may also be accomplished by decantation and centrifugation followed by vacuum drying; or direct from cream by breaking the emulsion followed by centrifugation.

Ghee is a type of clarified butter made by cooking butter at about 120°C for a prolonged period of time during the separation process of nonfat dry matter. During cooking the milk solids are caramelized resulting in a nutty flavor when they are filtered out.

Butter with extremely low nonfat dry matter, e.g. clarified butter or "ghee", does not get appealing brown colour and desirable browned flavour when heated to frying temperatures. On the other hand, if the nonfat dry matter of butter is high, substantial crust (burnt black precipitates, burnt black precipitates, black flakes) formation and taste defects when fried can be observed. In the method of the invention, the nonfat dry matter of the butter raw material is adjusted to a range of 0.15% to less than 1.0% by weight. The adjustment process depends on the nonfat dry matter originally present in the butter raw material. Thus, if the nonfat dry matter of the butter raw material is less than 0.15% by weight, for example 0% by weight, the nonfat dry matter is increased to a range of 0.15% to less than 1.0% by weight by adding an aqueous solution comprising one or more ingredients introducing nonfat dry matter to the butter raw material. Suitable ingredients to increase nonfat dry matter include, but are not limited to, protein(s) and milk minerals. In an embodiment, an aqueous solution comprising one or more ingredients selected from milk protein, carbohydrates, such as lactose, glucose and galactose, and milk minerals is added to the butter preparation.

If the nonfat dry matter of the butter raw material is 1.8% by weight or more, the adjustment is carried out by reducing the original nonfat dry matter of the butter raw material to a range of 0.15% to less than 1.0% by weight. The original nonfat dry matter of the butter raw material can be, e.g., about 2.5% to about 6% by weight. In an embodiment, the nonfat dry matter of the butter raw material is in the range of 2.5% to 4% by weight.

In an embodiment of the invention, the method comprises the steps of:
- providing a butter preparation having a fat content of about 100% by weight and a nonfat dry matter of about 0% by weight,
- adjusting the nonfat dry matter of the butter preparation to a range of 0.15% to 1.0% by weight, more specifically 0.15% to 0.5% by weight, even more specifically 0.15% to 0.2% by weight, by adding an aqueous solution of milk protein to the butter preparation,
- adjusting the pH of the butter preparation with a nonfat dry matter from 0.15% to 1.0% by weight, more specifically 0.15% to 0.5% by weight, even more specifically 0.15% to 0.2% by weight, to a range of 4.5 to 8.5 to provide the butter product.

In an embodiment of the invention, the butter raw material is raw cream. In an embodiment, the method comprises the steps of:
- providing raw cream having a fat content in the range of about 35% by weight to about 60% by weight, specifically about 40% by weight,
- washing the raw cream with a washing liquid to provide a solution of the raw cream and the washing liquid,
- separating the washing liquid from the solution to provide washed cream with a reduced nonfat dry matter content,
- churning the washed cream to provide butter with a nonfat dry matter from 0.15% to 1.0% by weight, more specifically 0.15% to 0.5% by weight, even more specifically 0.15% to 0.2% by weight,
- adjusting the pH of the butter with a nonfat dry matter from 0.15% to 1.0% by weight, more specifically 0.15% to 0.5% by weight, even more specifically 0.15% to 0.2% by weight, to a range of 4.5 to 8.5 to provide the butter product.

In an embodiment, the butter product produced by the method of the invention has a fat content of at least 80% (w/w). In another embodiment, the fat content is in the range of 80% (w/w) to about 90% (w/w). In a further embodiment, the fat content is in the range of 80% (w/w) to about 85% (w/w).

In an embodiment, the butter product produced by the method of the invention has a water content in the range of about 10% to 16%.

It is essential that a washing liquid has a low dry matter content. For example, the washing liquid can be water. Moreover, various membrane filtration fractions of a milk-based stream can be used as the washing liquid. The milk-based stream can be, e.g., fresh full fat milk or a milk fraction obtained from processing of fresh milk, such as skimmed milk, whey obtained from cheese manufacture, or buttermilk from butter manufacture. It is commonly known in the art that components of milk, especially protein, lactose and milk minerals, can be separated into different fractions by successive steps of ultrafiltration, nanofiltration and reverse osmosis. Ultrafiltration permeate of milk is protein-depleted and contains lactose and soluble milk minerals. Nanofiltration permeate of the ultrafiltration permeate is protein and lactose-depleted, and contains soluble milk minerals. Reverse osmosis of the nanofiltration permeate substantially removes soluble milk minerals and provides pure water as a permeate fraction. The nanofiltration permeate with low lactose and protein contents, and reverse osmosis permeate have both a low dry matter content and can be suitably used as washing liquid in the method of the invention. Suitable dry matter content of the washing liquid is less than 5% (w/w). In an embodiment, the dry matter content is at most 4% (w/w). In another embodiment, the dry matter content is at most 1.8% (w/w). In a further embodiment, the dry matter content is at most 1.0% (w/w). In a still further embodiment, the dry matter content is at most 0.2% (w/w).

Whey obtained from cheese manufacture contains whey protein, lactose and milk minerals, among others. Suitable membrane filtrations, such as ultrafiltration and/or nanofiltration of whey provide fractions which have a low dry matter content and are suitable as washing liquid in the present invention. Similarly, membrane filtration(s) of buttermilk provide(s) suitable fractions with low dry matter. For example, permeate from ultrafiltration of lactose-depleted buttermilk can be used as washing liquid.

Addition of a washing liquid to raw cream provides a solution of the raw cream and the washing liquid. In an embodiment of the invention, the raw cream is diluted with a washing liquid by a dilution factor of at least 1:10 w/w. In another embodiment of the invention, the raw cream is diluted with a washing liquid by a dilution factor of at least 1:11 w/w. In an embodiment of the invention, the raw cream is diluted with a washing liquid by a dilution factor of at least 1:12 w/w. The washing liquid and the raw cream are gently mixed followed by removal of the washing liquid. The washing liquid can be removed immediately after the raw cream and the washing liquid are thoroughly mixed, or after a short period of time. The washing liquid is separated by a separator. In an embodiment, the washing liquid is water.

After washing, the washing liquid is removed from the solution to provide washed cream. In addition to washing liquid, solid matter, i.e. protein, lactose and milk minerals, are removed from the raw cream. The removal of the washing liquid can be carried out in appropriate manners. In an embodiment, the washing liquid is separated by a centrifugal separator in a conventional manner. In another embodiment, the washing liquid is separated by microfiltration. The pore size of the microfiltration membrane is suitably in the range of 0.8 µm to 2.0 µm. In an embodiment, the pore size is 1.4 µm. The microfiltration is suitably carried out at a temperature from 40°C to 60°C. In an embodiment, microfiltration is carried out at about 50°C.

Washed cream with a reduced nonfat dry matter is then churned in a conventional manner to provide butter with a reduced nonfat dry matter.

In the method of the invention, the pH of is adjusted to a range of 4.5 to 8.5. The pH adjustment can be performed before, during or after the churning. In an embodiment, the pH is adjusted to less than pH 6.5, specifically less than 6, more specifically less than 5.2, by a food grade acid, such as lactic acid. In an embodiment, the pH is adjusted to more than pH 6.5, specifically more than 6.8, by a food grade base, such as sodium or potassium hydroxide. The pH of the butter product affects the extent of Maillard reaction and formation of aroma compounds. Different aroma compounds are formed in acidic pH or in alkaline pH. Browning and flavour of the butter product can be affected by adjusting the amount and composition of nonfat dry matter on one hand, and the pH of the butter product on the other hand.

Addition of aqueous solution(s) to a fat portion is typically carried out using a high performance mixer, such as Ultra-Turrax, to produce a homogenous water-fat dispersion.

Another object of the invention is to provide butter having a fat content of at least 80% by weight, a nonfat dry matter in the range of 0.15% to 1.0% by weight and a pH in the range of 4.5 to 8.5. In an embodiment, the fat content of the butter is in the range of 80% (w/w) to about 90% (w/w). In another embodiment, the fat content is in the range of 80% (w/w) to about 85% (w/w).

In an embodiment, the nonfat dry matter of the butter obtained by the method of the invention is in the range of 0.15% 1.0% by weight. In a further embodiment, the nonfat dry matter is 0.15% to 0.5% by weight. In a still further embodiment, the nonfat dry matter is 0.15% to 0.2% by weight.

The observable difference between conventional butters and butter of the invention lies in the frying properties. Since the butter of the invention contains less protein, it does not burn and does not form crust when fried. Further, acidic pH improves browning of butter. The frying properties of conventional butter and butters of the invention are illustrated in example 6.

The following examples are presented for further illustration of the invention without limiting the invention thereto. The percentages are given on weight basis.

### Examples

### Reference Example 1

Cream with a fat content of 36% was obtained from full-fat milk by centrifugal separation (Centrifugal Separator, Frau spa Model CN2A). 20 kg of the cream was processed to butter in a conventional manner by ripening the cream at 10°C for 16 hours and then churned in a laboratory churn to provide butter. The composition of the butter ("conventional butter") is shown in Table 1.

### Example 1. Butter production from cream washed with water

Cream with a fat content of 40% was used as a butter raw material. The nonfat dry matter of cream was 4.6% by weight. The cream was obtained from full-fat milk by centrifugal separation (Centrifugal Separator, Frau spa Model CN2A). 10 kg cream was diluted with 110 kg water. The mixture of cream and water was heated to 55°C and separated with the above separator to produce washed cream and washing water. The nonfat dry matter of the washed cream was 0.5% by weight.

The washed cream was pasteurized at 85°C for 20 sec and then ripened at 10°C for 16 hours. The cream was then churned in a laboratory churn for 10 minutes into buttermilk and butter with a modified nonfat dry matter.

The composition of the butter with a modified nonfat dry matter ("invention") is shown in Table 1.

**Table 1**

| | Conventional butter | Invention |
|---|---|---|
| Fat (%) | 82 | 84.6 |
| Protein (%) | 0.6 | 0.2 |
| Lactose (%) | 0.8 | 0.02 |
| Ash (%) | 0.4 | 0 |
| Nonfat dry matter (%) | 1.8 | 0.2 |
| Sodium (mg/kg) | 93 | 30 |
| Potassium (mg/kg) | 230 | 18 |
| Calcium (mg/kg) | 170 | 44 |
| Magnesium (mg/kg) | 18 | <10 |
| Phosphorous (mg/kg) | 200 | 98 |
| Moisture content (%) | 16.2 | 15.2 |

The pH of the resultant butter was adjusted to 4.7.

### Example 2. Butter production from cream washed with NF permeate

Cream with a fat content of 40% was obtained from full-fat milk by centrifugal separation (Centrifugal Separator, Frau spa Model CN2A). 10 kg cream was diluted with 100 kg nanofiltration (NF) permeate. The NF permeate had a lactose content of 0.04% and a dry matter content of 0.3%. The mixture of cream and the NF permeate was heated to 55°C and separated with the above separator to produce washed cream and washing water.

The washed cream was pasteurized at 85°C for 20 sec and then ripened at 10°C for 16 hours. The cream was then churned in a laboratory churn for 10 minutes into buttermilk and butter. Buttermilk was separated from butter grains.

The compositions of the products obtained in the above different steps are given in Table 2.

**Table 2**

| | Dry matter (%) | Fat (%) | Non-fat dry matter (%) | Protein (%) | Lactose (%) |
|---|---|---|---|---|---|
| Cream | 44.2 | 39.4 | 4.8 | 1.94 | 2.8 |
| Washed cream | 31.8 | 31.3 | 0.5 | 0.30 | 0.19 |
| Washing water | 0.5 | 0.04 | 0.5 | 0.19 | 0.27 |
| Butter | 85.4 | 85.1 | 0.3 | 0.22 | 0.04 |

The results show that a substantial portion of protein and lactose are removed from a cream raw material by washing with NF permeate. Thus, the non-fat dry matter of the washed cream is lower compared to that of the cream raw material. Also, the nonfat dry matter of the butter product is lower compared to that of conventional butter.

The pH of the resultant butter was adjusted to pH 7.

### Example 3. Butter production from cream washed with water (threefold wash)

Cream with a fat content of 40% was obtained from full-fat milk by centrifugal separation (Centrifugal Separator, Frau spa Model CN2A). 10 kg cream was diluted with 100 kg water. The mixture of cream and water was heated to 55°C and separated with the above separator to produce washed cream and washing water.

The washed cream was diluted again with water ten times the weight of the washed cream. The mixture of cream and water was heated to 55°C and separated with the above separator to produce washed cream and washing water.

The two times washed cream was diluted again with water ten times the weight of the washed cream. The mixture of cream and water was heated to 55°C and separated with the above separator to produce washed cream and washing water.

The three times washed cream was pasteurized at 85°C for 20 sec and then ripened at 10°C for 16 hours. The cream was then churned in a laboratory churn for 10 minutes into buttermilk and butter. Buttermilk was separated from butter grains.

The compositions of the products obtained in the above different steps are given in Table 3. The composition of the washing water was analyzed after the third washing cycle of the cream.

**Table 3**

| | Dry matter (%) | Fat (%) | Non-fat dry matter (%) | Protein (%) | Lactose (%) |
|---|---|---|---|---|---|
| Cream | 46.2 | 41.3 | 4.9 | 1.95 | 2.80 |
| Washed cream | 47.7 | 47.5 | 0.2 | 0.21 | 0.00 |
| Washing water | 0.0 | 0.0 | 0.0 | 0.03 | 0.00 |
| Butter | 82.6 | 82.4 | 0.18 | 0.18 | 0.00 |

The results show that intense washing of a cream raw material performed in this example removes a substantial portion of protein and lactose from the cream raw material. Thus, the non-fat dry matter of the washed cream is lower compared with that of the cream raw material. Also, the nonfat dry matter of the butter product is lower compared to that of conventional butter.

The pH of the resultant butter was adjusted to pH 4.5.

### Example 4. Butter production from clarified butter

Clarified butter (butteroil) having a nonfat dry matter of 0% was used as a butter raw material. The nonfat dry matter of the butter raw material was increased by adding an aqueous solution containing protein. The aqueous solution of protein was prepared by adding dry ingredients, i.e. 0.12 g of casein, 0.2 g β-lactoglobulin and 0.1 g α-lactalbumin to 9.8 g of deionized water.

The pH-adjusted protein solution (10.22 g) was dispersed to 50 g of the clarified butter using Ultra-Turrax machine.

The pH of the resultant butter was adjusted to 7.2 by adding 3% NaOH solution. The nonfat dry matter of the resultant butter was 0.70% by weight.

### Example 5. Butter production from clarified butter

Clarified butter (butteroil) having a nonfat dry matter of 0% was used as a butter raw material. The nonfat dry matter of the butter raw material was increased by adding an aqueous solution containing protein and sugar. The aqueous solution of protein and sugar was prepared by adding dry ingredients, i.e. 0.25 g of whey protein concentrate, 0.025 g galactose and 0.026 g lactose to 9.92 g of deionized water.

The pH-adjusted protein solution (10.22 g) was dispersed to 50 g of the clarified butter using Ultra-Turrax machine.

The pH of the resultant butter was adjusted to 7.2 by adding 3% NaOH solution. The nonfat dry matter of the resultant butter was 0.50% by weight.

### Example 6

The frying properties of conventional butter prepared in reference example 1 (sample 1), and of the butters of the invention prepared in example 1 (sample 2) and example 4 (sample 3) were studied. Butter samples were fried in an oven at 200°C for 30 minutes. The results are shown in table 4.

The color of the samples was measured according to the method described in Campbell et al., Journal of Dairy Science, Volume 96, Issue 12, December 2013, pp. 7404-7413, using a Minolta Chroma meter (CR-410; Konica Minolta Sensing Americas Inc., Ramsey, NJ). Each sample was measured in triplicate. Before measurements were taken, a factory-supplied calibration plate was used to calibrate the instrument. The Hunter CIE L*a*b* color scale (where L* is the lightness of the color, a* is its position between red/magenta and green, and b* is its position between yellow and blue) was used. Reflectance values were taken with a white calibration plate as the background.

**Table 4**

| Sample | Colour | | | Black particles quantity | Black particles colour | Form | Smell |
|---|---|---|---|---|---|---|---|
| | L | a | b | | | | |
| 1 | 34.2 | 4.6 | 7.2 | 5 | black | large particles | caramel, burnt |
| 2 | 46.5 | 3.2 | 18.9 | 4 | reddish brown | large particles | bitter, roasted |
| 3 | 49.3 | 5.4 | 13.6 | 4 | medium brown | large particles | roasted, caramel, bitter |

It was observed that conventional butter formed a substantial amount of crust, whereas the butters of the invention formed less crust. The results shown that formation of crust and resultant burnt flavor could be avoided by reducing the nonfat dry matter of conventional butter.

The invention and its embodiments are not limited to the examples described above but may vary within the scope of the claims.

## Claims

1. A method of making a butter product, comprising the steps of:
- providing a butter raw material having a fat content at least 35% by weight,
- adjusting the nonfat dry matter of the butter raw material to a range of 0.15% to 1.0% by weight, more specifically 0.15% to 0.5% by weight, even more specifically 0.15% to 0.2% by weight,
- optionally churning the butter raw material to provide butter,
- adjusting the pH to provide the butter product having a pH in the range of 4.5 to 8.5.

2. The method of claim 1, wherein the pH adjustment is performed before, during or after the churning.

3. The method of claim 1 or 2, wherein the butter raw material is a butter preparation having a fat content of about 100% by weight and a nonfat dry matter of about 0% by weight.

4. The method of claim 3, wherein the nonfat dry matter of the butter preparation is adjusted to a range of 0.15% to 1.0% by weight, more specifically 0.15% to 0.5% by weight, even more specifically 0.15% to 0.2% by weight, by adding an aqueous solution comprising one or more ingredients selected from milk protein, carbohydrates, such as lactose, glucose and galactose, and milk minerals to the butter preparation.

5. The method of any one of the preceding claims, comprising the steps of:
- providing a butter preparation having a fat content of about 100% by weight and a nonfat dry matter of about 0% by weight,
- adjusting the nonfat dry matter of the butter preparation to a range of 0.15% to 1.0% by weight, more specifically 0.15% to 0.5% by weight, even more specifically 0.15% to 0.2% by weight, by adding an aqueous solution of milk protein to the butter preparation,
- adjusting the pH of the butter preparation with a nonfat dry matter from 0.15% to 1.0% by weight, more specifically 0.15% to 0.5% by weight, even more specifically 0.15% to 0.2% by weight, to a range of 4.5 to 8.5 to provide the butter product.

6. The method of claim 1 or 2, wherein the butter raw material is raw cream having a fat content in the range of about 35% by weight to about 60% by weight, specifically about 40% by weight.

7. The method of claim 6, comprising the steps of:
- providing raw cream having a fat content in the range of about 35% by weight to about 60% by weight, specifically about 40% by weight,
- washing the raw cream with a washing liquid to provide a solution of the raw cream and the washing liquid,
- separating the washing liquid from the solution to provide washed cream with a reduced nonfat dry matter content,
- churning the washed cream to provide butter with a nonfat dry matter from 0.15% to 1.0% by weight, more specifically 0.15% to 0.5% by weight, even more specifically 0.15% to 0.2% by weight,
- adjusting the pH of the butter with a nonfat dry matter from 0.15% to 1.0% by weight, more specifically 0.15% to 0.5% by weight, even more specifically 0.15% to 0.2% by weight, to a range of 4.5 to 8.5 to provide the butter product.

8. The method of claim 7, wherein the washing liquid is a liquid with a low dry matter content, such as water or a membrane filtration fraction obtained from a membrane filtration of a milk-based stream, such as a protein and lactose-depleted nanofiltration permeate or protein, lactose and milk mineral-depleted reverse osmosis permeate, specifically water.

9. The method of claim 7 or 8, wherein the dry matter content of the washing liquid is less than 5% (w/w), specifically at most 1.8%, more specifically at most 1.0%, even more specifically at most 0.2%.

10. The method of any one of claims 7 to 9, wherein the washing liquid is separated by a centrifugal separator or by microfiltration.

11. The method of any one of the preceding claims, wherein the nonfat dry matter of the butter product after the adjustment substantially consist of protein.

12. The method of any one of the preceding claims, wherein the pH is adjusted by adding an aqueous solution of a food grade acid, such as lactic acid, or a food grade base, such as sodium hydroxide or potassium hydroxide.

13. The method of any one of the preceding claims, wherein the fat content of the butter product is in the range of 80% (w/w) to about 90% (w/w), specifically in the range of 80% (w/w) to about 85% (w/w).

14. The method of any one of the preceding claims, wherein the water content of the butter product is in the range of about 10% to 16%.

## Patentansprüche

1. Verfahren zur Herstellung eines Butterprodukts, das die folgenden Schritte umfasst:
- Bereitstellen eines Butterrohstoffs, der einen Fettgehalt von mindestens 35% nach Gewicht aufweist,
- Einstellen von nicht fetter Trockensubstanz des Butterrohstoffs auf einen Bereich von 0,15% bis 1,0% nach Gewicht, konkreter 0,15% bis 0,5% nach Gewicht, noch konkreter 0,15% bis 0,2% nach Gewicht,
- Optional Ausbuttern des Butterrohstoffs, um Butter bereitzustellen,
- Einstellen des pH, um das Butterprodukt bereitzustellen, das einen pH im Bereich von 4,5 bis 8,5 aufweist.

2. Verfahren nach Anspruch 1, wobei die pH-Einstellung vor, während oder nach dem Ausbuttern durchgeführt wird.

3. Verfahren nach Anspruch 1 oder 2, wobei der Butterrohstoff eine Butterzubereitung ist, die einen Fettgehalt von etwa 100% nach Gewicht und eine nicht fette Trockensubstanz von etwa 0% nach Gewicht aufweist.

4. Verfahren nach Anspruch 3, wobei die nicht fette Trockensubstanz der Butterzubereitung auf einen Bereich von 0,15% bis 1,0% nach Gewicht, konkreter 0,15% bis 0,5% nach Gewicht, noch konkreter 0,15% bis 0,2% nach Gewicht eingestellt wird durch Zugeben zu der Butterzubereitung einer wässrigen Lösung, die eine oder mehrere Zutaten umfasst, ausgewählt aus Milchprotein, Kohlenhydrate, wie Laktose, Glukose und Galaktose, und Milchmineralstoffen.

5. Verfahren nach einem der vorstehenden Ansprüche, umfassend folgende Schritte:
- Bereitstellen einer Butterzubereitung, die einen Fettgehalt von etwa 100% nach Gewicht und eine nicht fette Trockensubstanz von etwa 0% nach Gewicht aufweist,
- Einstellen der nicht fetten Trockensubstanz der Butterzubereitung auf einen Bereich von 0,15% bis 1,0% nach Gewicht, konkreter 0,15% bis 0,5% nach Gewicht, noch konkreter 0,15% bis 0,2% nach Gewicht, durch Zugeben einer wässrigen Lösung aus Milchprotein zu der Butterzubereitung,
- Einstellen des pH der Butterzubereitung mit einer nicht fetten Trockensubstanz von 0,15% bis 1,0% nach Gewicht, konkreter 0,15% bis 0,5% nach Gewicht, noch konkreter 0,15% bis 0,2% nach Gewicht, auf einen Bereich von 4,5 bis 8,5, um das Butterprodukt bereitzustellen.

6. Verfahren nach Anspruch 1 oder 2, wobei der Butterrohstoff Rohrahm ist, der einen Fettgehalt im Bereich von etwa 35% nach Gewicht bis etwa 60% nach Gewicht, konkret etwa 40% nach Gewicht aufweist.

7. Verfahren nach Anspruch 6, umfassend folgende Schritte:
- Bereitstellen von Rohrahm, der einen Fettgehalt im Bereich von etwa 35% nach Gewicht bis etwa 60% nach Gewicht, konkret etwa 40% nach Gewicht aufweist,
- Waschen des Rohrahms mit einer Waschflüssigkeit, um eine Lösung aus Rohrahm und der Waschflüssigkeit bereitzustellen,
- Abtrennen der Waschflüssigkeit aus der Lösung, um gewaschen Rahm mit einem verringerten Gehalt an nicht fetter Trockensubstanz bereitzustellen,
- Ausbuttern des gewaschenen Rahms, um Bitter mit einem Gehalt von nicht fetter Trockensubstanz von 0,15% bis 1,0% nach Gewicht, konkreter 0,15% bis 0,5% nach Gewicht, noch konkreter 0,15% bis 0,2% nach Gewicht bereitzustellen,
- Einstellen des pH der Butter mit einer nicht fetten Trockensubstanz von 0,15% bis 1,0% nach Gewicht, konkreter 0,15% bis 0,5% nach Gewicht, noch konkreter 0,15% bis 0,2% nach Gewicht, auf einen Bereich von 4,5 bis 8,5, um das Butterprodukt bereitzustellen.

8. Verfahren nach Anspruch 7, wobei die Waschflüssigkeit eine Flüssigkeit mit einem niedrigen Trockensubstanzgehalt ist, wie Wasser oder eine Membranfiltrationsfraktion, die aus einer Membranfiltration eines Stroms auf Milchbasis erhalten wurde, wie ein Nanofiltrationspermeat, aus dem Protein und Laktose entzogen wurde, oder Osmosepermeat, aus dem Protein, Laktose und Milchmineralstoffe entzogen wurden, insbesondre Waser.

9. Verfahren nach Anspruch 7 oder 8, wobei der Trockensubstanzgehalt der Waschflüssigkeit weniger als 5% (nach Gewicht), konkret maximal 1,8%, konkreter maximal 1,0%, noch konkreter maximal 0,2% beträgt.

10. Verfahren nach einem der Ansprüche 7 bis 9, wobei die Waschflüssigkeit durch einen Zentrifugalabscheider oder durch Mikrofiltration abgetrennt wird.

11. Verfahren nach einem der vorstehenden Ansprüche, wobei die nicht fette Trockensubstanz des Butterprodukts nach Einstellen im Wesentlichen aus Protein besteht.

12. Verfahren nach einem der vorstehenden Ansprüche, wobei der pH durch Zugeben einer wässrigen Lösung einer lebensmitteltauglichen Säure, wie Milchsäure, oder einer lebensmitteltauglichen Base, wie Natriumhydroxid oder Kaliumhydroxid eingestellt wird.

13. Verfahren nach einem der vorstehenden Ansprüche, wobei der Fettgehalt des Butterprodukts im Bereich von 80% (nach Gewicht) bis etwa 90% (nach Gewicht w/w), konkret im Bereich von 80% (nach Gewicht) bis etwa 85% (nach Gewicht) liegt.

14. Verfahren nach einem der vorstehenden Ansprüche, wobei der Wassergehalt des Butterprodukts im Bereich von etwa 10% bis 16% liegt.

## Revendications

1. Procédé de fabrication d'un produit de type beurre, comprenant les étapes suivantes :
- fournir une matière première de beurre ayant une teneur en matière grasse d'au moins 35 % en poids,
- ajuster la matière sèche non grasse de la matière première de beurre à une plage allant de 0,15 % à 1,0 % en poids, plus précisément de 0,15 % à 0,5 % en poids, encore plus précisément de 0,15 % à 0,2 % en poids,
- facultativement baratter la matière première de beurre pour obtenir du beurre,
- ajuster le pH pour obtenir le produit de type beurre ayant un pH situé dans la plage allant de 4,5 à 8,5.

2. Procédé selon la revendication 1, dans lequel l'ajustement du pH est effectué avant, pendant ou après le barattage.

3. Procédé selon la revendication 1 ou la revendication 2, dans lequel la matière première de beurre est une préparation de type beurre ayant une teneur en matière grasse d'environ 100 % en poids et une matière sèche non grasse d'environ 0 % en poids.

4. Procédé selon la revendication 3, dans lequel la matière sèche non grasse de la préparation de type beurre est ajustée à une plage allant de 0,15 % à 1,0 % en poids, plus précisément de 0,15 % à 0,5 % en poids, encore plus précisément de 0,15 % à 0,2 % en poids, en ajoutant à la préparation de type beurre une solution aqueuse comprenant un ou plusieurs ingrédients sélectionnés parmi des protéines de lait, des glucides, tels que le lactose, le glucose et le galactose, et des minéraux du lait.

5. Procédé selon l'une quelconque des revendications précédentes, comprenant les étapes suivantes :
- fournir une préparation de type beurre ayant une teneur en matière grasse d'environ 100 % en poids et une matière sèche non grasse d'environ 0 % en poids,
- ajuster la matière sèche non grasse de la préparation de type beurre à une plage allant de 0,15 % à 1,0 % en poids, plus précisément de 0,15 % à 0,5 % en poids, encore plus précisément de 0,15 % à 0,2 % en poids, en ajoutant une solution aqueuse de protéines de lait à la préparation de type beurre,
- ajuster le pH de la préparation de type beurre avec une matière sèche non grasse allant de 0,15 % à 1,0 % en poids, plus précisément de 0,15 % à 0,5 % en poids, encore plus précisément de 0,15 % à 0,2 % en poids, à une plage de 4,5 à 8,5 pour obtenir le produit de type beurre.

6. Procédé selon la revendication 1 ou la revendication 2, dans lequel la matière première de beurre est une crème crue ayant une teneur en matière grasse située dans la plage allant d'environ 35 % en poids à environ 60 % en poids, précisément d'environ 40 % en poids.

7. Procédé selon la revendication 6, comprenant les étapes suivantes :
- fournir une crème crue ayant une teneur en matière grasse située dans la plage allant d'environ 35 % en poids à environ 60 % en poids, précisément d'environ 40 % en poids,
- laver la crème crue avec un liquide de lavage, pour obtenir une solution de la crème crue et du liquide de lavage,
- séparer le liquide de lavage et la solution, pour obtenir une crème lavée ayant une teneur en matière sèche non grasse réduite,
- baratter la crème lavée, pour obtenir du beurre ayant une matière sèche non grasse à proportion de 0,15 % à 1,0 % en poids, plus précisément de 0,15 % à 0,5 % en poids, encore plus précisément de 0,15 % à 0,2 % en poids,
- ajuster le pH du beurre avec une matière sèche non grasse à proportion de 0,15 % à 1,0 % en poids, plus précisément de 0,15 % à 0,5 % en poids, encore plus précisément de 0,15 % à 0,2 % en poids, à une plage allant de 4,5 à 8,5 pour obtenir le produit de type beurre.

8. Procédé selon la revendication 7, dans lequel le liquide de lavage est un liquide à faible teneur en matière sèche, tel que de l'eau ou une fraction de filtration sur membrane obtenue à partir d'une filtration sur membrane d'un courant à base de lait, telle qu'un perméat de nanofiltration appauvri en protéines et en lactose ou un perméat d'osmose inverse appauvri en protéines, en lactose et en minéraux du lait, spécifiquement de l'eau.

9. Procédé selon la revendication 7 ou la revendication 8, dans lequel la teneur en matière sèche du liquide de lavage est inférieure à 5 % (m/m), précisément est au plus de 1,8 %, plus précisément est au plus de 1,0 %, encore plus précisément est au plus de 0,2 %.

10. Procédé selon l'une quelconque des revendications 7 à 9, dans lequel le liquide de lavage est séparé par un séparateur centrifuge ou par microfiltration.

11. Procédé selon l'une quelconque des revendications précédentes, dans lequel la matière sèche non grasse du produit de type beurre après l'ajustement consiste essentiellement en des protéines.

12. Procédé selon l'une quelconque des revendications précédentes, dans lequel le pH est ajusté en ajoutant une solution aqueuse d'un acide de qualité alimentaire, tel que l'acide lactique, ou une base de qualité alimentaire, telle que l'hydroxyde de sodium ou l'hydroxyde de potassium.

13. Procédé selon l'une quelconque des revendications précédentes, dans lequel la teneur en matière grasse du produit de type beurre est située dans la plage allant de 80 % (m/m) à environ 90 % (m/m), spécifiquement dans la plage allant de 80 % (m/m) à environ 85 % (m/m).

14. Procédé selon l'une quelconque des revendications précédentes, dans lequel la teneur en eau du produit de type beurre est située dans la plage allant d'environ 10 % à 16 %.
